# EUROPEAN PATENT APPLICATION

(11) **EP 4 517 691 A1**
(43) Date of publication of application: **05.03.2025**
(21) Application number: 24189142.3
(22) Date of filing: 17.07.2024
(51) Int. Cl.: G06V 10/80, G06V 10/82, G06V 20/58

(54) **A PERCEPTION METHOD AND DEVICE FOR AUTONOMOUS DRIVING**

(30) Priority: 31.08.2023 CN 202311119901
(71) Applicant: Robert Bosch GmbH, 70442 Stuttgart (DE)
(72) Inventor: WANG, Wenfu, Shanghai, 200335 (CN); LI, Xinrun, Shanghai, 200335 (CN)

(57) **Abstract**

A perception method for autonomous driving is provided, comprising obtaining a first detection result for a first image using a first neural network based on a first image, wherein the first image is obtained for a target region; obtaining at least one second detection result for the first image using at least one second neural network based on the first image, wherein at least one additional input is generated based on the first image, with each additional input among the at least one additional input at least representing a change in the first image, and obtaining at least one second detection result for the first image using the at least one second neural network based on the at least one additional input; and fusing the first detection result and at least one second detection result to obtain a final perception result for the first image. This improves the accuracy and robustness of perception, thereby enhancing the safety of autonomous driving.

## Description

### Technical Field

The present disclosure relates to the field of smart transportation, particularly to the field of autonomous driving.

### Background Art

In the field of autonomous driving, perception of the environment serves as the basis for vehicle localization, making decisions regarding vehicle driving pathways, and controlling the vehicle to execute those decisions. Its accuracy and robustness are of paramount importance. Accurate and robust environmental perception may enhance the safety of autonomous driving; conversely, inadequate perception may lead to immeasurable traffic accidents.

With the development of computer vision, neural networks have become widely used in environmental perception applications. However, due to the limitations in training data and the imbalance in the distribution of training data (long-tail problem), coupled with the limited parameters of current neural networks while real-world data is high-dimensional, there is still room for improvement even when applying neural networks to environmental perception.

At present, redundant or parallel neural networks are often added to enhance the safety of autonomous driving. However, the redundant or parallel neural networks added are generally similar to the original neural networks, leading to the possibility of failing under similar conditions (common cause failure). In other words, their failures are highly correlated, thus not achieving the desired effect.

### Summary of the Invention

It would be desirable to provide a perception method and device for autonomous driving that is capable of improving the accuracy and robustness of environmental perception, thereby ensuring safe autonomous driving.

According to one aspect, a perception method for autonomous driving is provided, comprising obtaining a first detection result for a first image using a first neural network based on the first image, wherein the first image is obtained for a target region; obtaining at least one second detection result for the first image using at least one second neural network based on the first image, wherein obtaining the at least one second detection result comprises generating at least one additional input based on the first image, with each additional input among the at least one additional input at least representing a change in the first image, and obtaining at least one second detection result for the first image using the at least one second neural network based on the at least one additional input; as well as fusing the first detection result and at least one second detection result to obtain a final perception result for the first image.

According to another aspect, a training method for a neural network used for perception in autonomous driving is provided, comprising a first neural network, at least one second neural network, and a fusion module used for fusing the output of the first neural network with the output of the at least one second neural network to obtain the output of the neural network, and the training method comprises pre-training the first neural network based on a plurality of first pre-training images and an object annotation result for each first pre-training image to obtain a pre-trained first neural network, wherein, a corresponding first pre-training detection result is obtained using the first neural network based on each first pre-training image among the plurality of first pre-training images; and pre-training each second neural network among the at least one second neural network based on a plurality of second pre-training images and a foreground object annotation result of each second pre-training image to obtain at least one pre-trained second neural network, wherein, at least one additional pre-training input is generated based on each second pre-training image, and a corresponding second pre-training detection result is obtained based on each additional pre-training input among the at least one additional pre-training input and corresponding second neural network; the at least one additional pre-training input at least represents a change in the second pre-training image, and the first and second pre-training images may be the same or different pre-training images.

According to another aspect, a perception device for autonomous driving is provided, comprising a memory and a processing unit, which are used for obtaining a first detection result for a first image using a first neural network based on the first image, wherein the first image is obtained for a target region; obtaining at least one second detection result for the first image using at least one second neural network based on the first image, wherein obtaining the at least one second detection result comprises generating at least one additional input based on the first image, with each additional input among the at least one additional input at least representing a change in the first image, and obtaining at least one second detection result for the first image using the at least one second neural network based on the at least one additional input; as well as fusing the first detection result and at least one second detection result to obtain a final perception result for the first image.

According to another aspect, an autonomous driving system is provided, comprising a camera for obtaining a first image of a target region; and a perception device for autonomous driving according to various examples of the present disclosure.

According to yet another aspect, a computer-readable medium is provided, storing a computer program that, when executed by a processor, causes the processor to execute the perception method for autonomous driving according to the various examples of this present disclosure or the training method for a neural network according to the various examples of this present disclosure.

According to various examples of various aspects of the present disclosure, in addition to an existing neural network (first neural network) that focuses on detecting and classifying objects in an input image, at least one parallel neural network (at least one second neural network) is added to focus on changes appearing in the input image, enabling the detection of the input image at different levels, which on the one hand retains sensitivity to the background in the input image and provides sensitivity to changed objects in the input image, while on the other hand, based on the detection result of the second neural network, prior knowledge may be introduced (such as prior knowledge unrelated to classification). As a result, this not only reduces common cause failures and improves the accuracy, reliability, and robustness of environmental perception, thereby enhancing the safety of autonomous driving, but also increases the interpretability of the perception result.

In some examples, unlike the existing first neural network that focuses on detecting and classifying an object in the input image, the at least one parallel neural network focuses on the task of detecting a changed object in the input image without involving classification, i.e., the at least one parallel neural network detects the presence of a changed object in the image. Therefore, even in practical scenarios where an object or category that was absent in the training dataset appears in the input image (such as an obstacle or construction zone), this neural network is still capable of detecting the presence of such an object and indicating the existence of an unknown object. This further reduces common cause failures between different neural networks, thereby further enhancing the accuracy, reliability, and robustness of environmental perception. In addition, simply inserting the aforementioned parallel neural network onto the existing neural network allows the neural network structure according to various examples of the present disclosure to be implemented, thus this approach also offers convenience in practical use.

### Description of Accompanying Drawings

In the accompanying drawings, the examples are illustrated by way of example only, not by way of limitation, with like reference numerals referring to like elements in the accompanying drawings.
FIG. 1 shows a perception method for autonomous driving according to one example of the present disclosure;
FIG. 2 shows a training method for a neural network according to one example of the present disclosure;
FIG. 3 shows a perception device for autonomous driving according to one example of the present disclosure.

Various aspects and features of the various examples of the present disclosure are described with reference to the accompanying drawings above. The accompanying drawings above are merely illustrative and not limiting. In addition, not all portions of the device according to the examples of the present disclosure in the accompanying drawings above are shown with reference numerals, and only the relevant components are shown in some accompanying drawings. This does not limit the various portions merely to that shown in the accompanying drawings of the Specification.

### Specific Embodiments

At present, enhancing the accuracy and robustness of environmental perception is achieved by providing a parallel neural network on the basis of an existing neural network. However, on the one hand, the parallel neural network is often trained with data similar to that used for training the existing neural network. In the field of autonomous driving, for instance, images captured by an image sensor (e.g. camera) disposed on a roadside or an image sensor disposed on a vehicle are usually used to train both the existing and parallel neural networks. Although the images themselves may be different, their feature distributions are likely to be similar. On the other hand, the existing and parallel neural networks usually have similar structures. Due to the aforementioned two aspects, the provided parallel neural network is prone to common cause failures with the existing neural network, resulting in false positive or false negative perception results, for example, the perception result may include an object that is absent in the input image (false positive) or may not include an object that is present in the input image (false negative). As such, it is evident that even if with the provision of the parallel neural network, the current method is still unable to achieve satisfactory environmental perception. For example, when an object or category that was absent in the training image appears on a road, such as an obstacle or a construction zone, environmental perception may fail regardless of whether the parallel neural network is provided or not.

The inventors of the present application recognized that the current parallel neural network has similar feature distributions in their training data and similar structures to the existing neural network, which easily leads to common cause failures. Therefore, they designed the following examples of the present disclosure to detect input images at different levels, reduce the occurrence of common cause failures, improve the accuracy, reliability, and robustness of environmental perception, thereby providing a foundation for safe autonomous driving.

According to various examples of the present disclosure, at least one parallel neural network is added to the existing neural network. The parallel neural network focuses on detecting changes in the input image, which is different from the existing neural network, wherein the primary focus is on detecting and classifying all objects in the input image. By combining the existing neural network that focuses on detecting and classifying objects in the input image with the parallel neural network that focuses on detecting changes in the input image, the existing neural network and the corresponding parallel neural network focus on different aspects of the input image. This retains sensitivity to the background in the input image while providing sensitivity to changed objects therein. This not only reduces common cause failures and improves the accuracy, reliability, and robustness of environmental perception, thereby enhancing the safety of autonomous driving, but also increases the interpretability of the perception results.

In some examples, unlike the existing neural network, the at least one parallel neural network does not involve classification, i.e., the at least one parallel neural network includes only the detection of a changed object in the input image (i.e., detecting the presence of a changed object) without classifying the changed object therein (e.g., detecting a changed object of an unknown type). Therefore, even if an object or category that was absent in the training dataset appears in the input image during actual application, such as an obstacle or a construction zone, the neural network is still capable of providing an accurate, reliable, and robust perception result. In particular, it is capable of detecting the presence of an object, even if it is unable to identify the object, it is still able to perceive the existence of an object. This may further reduce common cause failures, improve perception accuracy, reliability, and robustness under different environments (such as changes in the background of captured images caused by lighting or shadows), thereby enhancing the safety of autonomous driving.

In addition, according to various examples of the present disclosure, combining at least one parallel neural network (referred to as at least one second neural network hereafter) that focuses on changes in the input image with the existing neural network (referred to as the first neural network hereafter), the parallel neural network may be combined with the existing neural network as a plug-in architecture, facilitating retrofitting and upgrade based on the existing neural network.

In the field of autonomous driving, the "change" referred to in the present disclosure may refer to apparent differences that have occurred in certain areas of the current input relative to the original input image or reference image, which are significant for driving control decisions. The apparentness of this change may be consistent with human subjective judgment.

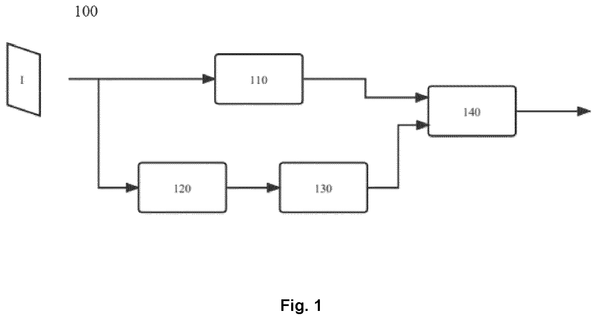

FIG. 1 shows a perception method 100 for autonomous driving according to one example of the present disclosure. As shown in FIG. 1, according to the method 100, in step 110, a first image (i.e., input image I) is input into the first neural network, thereby obtaining a first detection result for this first image using the first neural network based on this first image. The first neural network focuses on detecting and classifying various targets in the first image, particularly for image perception. The first neural network may comprise a first encoder and a first decoder, of which the first encoder is used for determining a first feature map based on the first image, and the first decoder is used for obtaining the first detection result based on the first feature map. The first detection result at least comprises a detection result of the object detected in the first image and may further comprise a classification result of the object classified in the first image. The first neural network may be obtained through training based on a training image and an object annotation result in the training image. The first image is obtained for a target region, for example, captured by a camera. In one example, the first image is an image depicting a traffic condition captured by a camera disposed at a roadside. In another example, the first image is an image depicting a surrounding environment of a vehicle captured by a camera disposed on the vehicle. The first image may be a single image from a sequence of images captured by the camera or a frame in a video image captured by the camera.

Next, at least one second detection result for the first image is obtained using at least one second neural network based on the first image. The second neural network is a neural network that detects a change in the first image and may be trained based on an annotated changed object in the training image. During the training process of the second neural network, data augmentation is expected to be used to improve the generalization thereof for different scenarios, which will be further described below. In one example, the second neural network may comprise a second encoder and a second decoder, of which the second encoder is at least used for determining a second feature map based on an additional input representing a change in the first image, and the second decoder is used for obtaining a second detection result based on the second feature map. In one example, the second neural network is used for detecting a changed object in the target region of the first image but does not involve the classification of the changed object. Since the input data is different compared to the first neural network, the feature weights on which the second neural network focuses differ from that of the first neural network, especially focusing on features with significant changes in the first image and whether there are foreground objects in these significantly changed features.

Specifically, at least one additional input is generated based on the first image, with each additional input among the at least one additional input representing at least a change in the first image, and at least one second detection result for the first image is obtained using the corresponding at least one second neural network based on the at least one additional input. Although FIG. 1 illustrates the case with one second neural network, it may also be anticipated that a plurality of second neural networks exist and that the plurality of second neural networks obtain corresponding second detection results based on a plurality of different additional inputs. The following will only describe the examples of the present disclosure with reference to the case of one second neural network shown in FIG. 1.

In one example, an additional input is generated based on the first image in step 120, and the additional input at least represents a change in the first image, wherein the change may include at least one of the following: a change in the first image compared to a reference image; a change between various regions in the first image; and a change between the first image and a second image. In some examples, the additional input may be an image, but this is not limiting; it may also be a feature map. The reference image comprises prior knowledge of the target region, which may be a pre-obtained image of the target region or an image obtained by processing an image sequence or video stream from a camera. The first and second images are temporally adjacent images captured of a target region, for example, the first and second images are adjacent images in an image sequence captured by the camera, or adjacent frame images in a video image captured by the camera, and wherein the second image may be one or a plurality of images.

A different method may be employed to determine a change in the first image and generate an additional input.

In one example, the additional input comprises a first additional input representing a change between the first image and the reference image. A plurality of images from an image sequence captured by the camera or frame images from a video stream (referred to as the plurality of images hereafter) may be stacked, aligned, and averaged to generate a mean image. For example, the first additional input may be generated by fusing the mean image as a reference image with the first image, where the first image may be one frame among the plurality of frames. It is anticipated that by stacking the plurality of images or image frames, for example, averaging over time, an image without foreground objects from the image sequence or plurality of image frames from the video stream is obtained as the reference image Although the expectation is to remove as many foreground objects as possible to obtain a reference image containing only background objects, this is not limiting, and some foreground objects, such as a stationary vehicle on the road, may be retained.

The algorithms for fusing the aforementioned reference image and the first image include, but are not limited to, matrix subtraction, Hadamard product, and attention mechanism. In fact, any image processing algorithm that is capable of detecting a change between the first image and the reference image may be applied to the examples of the present disclosure. Moreover, the reference image is not limited to the aforementioned mean image; other types of images containing prior knowledge may also be used as the reference image. For example, when the camera used to capture the first image is a vehicle-mounted camera, a map of the target region from the vehicle navigation system may be used as the reference image. In addition, the reference image may also be obtained through an optimization algorithm.

The aforementioned fusion is different from simply concatenating different information as input to the neural network. Concatenation refers to the processing method of tensors in data, for example, concatenating two tensors of H*W"`N to get H*W"`2N, thus preserving the information of both input tensors in its entirety. Unlike concatenation, the aforementioned fusion is capable of detecting a change between the first image and the reference image. Using this in the parallel neural network may increase perception accuracy and robustness.

In another example, the additional input comprises a second additional input representing a change between various regions in the first image. Saliency detection may be performed on the first image to detect a change between various regions in the first image, thereby generating the second additional input. For example, the most "salient" area in the first image may be detected, such as the most eye-catching area (e.g., a foreground object), thus generating additional input. Any type of saliency detection algorithm may be used in the examples of the present disclosure to detect a change between various regions in the first image.

In yet another example, the additional input comprises a third additional input representing a change between the first and second images, which are captured adjacently in time. Optical flow-based processing may be performed on the first and second images to generate the third additional input representing motion changes of corresponding pixels in the first and second images. Any optical flow-based algorithm may be used in the examples of the present disclosure to extract motion changes of corresponding pixels in the first and second images, including deep neural network-based algorithms, such as "Recurrent All-Pairs Field Transforms" (RAFT).

Although the above methods for determining a change in the first image have been described, this is not limiting; any algorithm capable of determining a change in the first image may be used in the examples of the present disclosure.

After generating the aforementioned additional input, it is input into the second neural network in step 130 to obtain a second detection result for the first image. That is, the input to the second neural network is the additional input determined based on the first image in step 120. Since the additional input to the second neural network represents a change in the first image, the second detection result is a detection result for a changed object in the first image, rendering this second detection result a targeted detection result for the change in the first image.

Since the second neural network focuses solely on detecting a change in the input image, as opposed to the first neural network which detects and classifies all objects in the input image, the detection and classification performed by the first neural network may be considered high-level, while the detection performed by the second neural network may be considered low-level. The second neural network adjusts the weights of the features on which it focuses, learns, and reasons about compared to the first neural network. The low-level detection performed by the second neural network based on the various types of additional inputs as described above (such as executing only the task of detecting the presence of a foreground object) may provide supplementary input for the high-level detection performed by the first neural network (such as object detection and object classification), thereby increasing perception accuracy, reliability, and robustness. In addition, using additional inputs representing different types of changes as intermediate state variables, combined with the perception result of the first neural network for reasoning, to detect additional hazardous objects, facilitates enhancing the safety and confidence level of perception.

In step 140, the first and second detection results are fused to obtain a final perception result for the first image. By fusing the first detection result focusing on detecting and classifying the targets in the first image with the second detection result focusing on changes in the first image, the perception method according to the present disclosure is capable of paying differentiated focus to the target region, thus avoiding common cause failures and increasing perception accuracy, reliability, and robustness.

In one example, the second neural network focuses solely on detecting a changed object without classifying it. Therefore, even in cases where the input image includes an object or category that has not appeared in the training image data, the perception method of the present disclosure may avoid common cause failures and achieve accurate, reliable, and robust perception. It will not arbitrarily identify an object as another type of target (for example, identifying a construction zone that has not appeared in the training image as a road background) because the neural network has not "seen" this object before.

A plurality of methods may be used to fuse the first and second detection results. In particular, according to the present disclosure, the neural network may comprise a fusion module in addition to the aforementioned first and second neural networks. This fusion module combines the outputs of the first and second neural networks to obtain the output of the neural network according to the present disclosure, i.e., the final perception result for the input image. Specifically, through this fusion module, the first detection result from the first neural network and the second detection result from the second neural network may be fused as described in step 140. In one example, the fusion module is capable of fusing the detection result of the object in the first image included in the first detection result (only involving the detection of the presence of a foreground object) with the detection result of the changed object from the second neural network (only involving the detection of the presence of a foreground object). It may be anticipated that in this case, the first detection result from the first neural network may also include an object classification result, while the detection result of the changed object from the second neural network does not include the object classification result. After the fusion of the first and second detection results, the classification result included in the first detection result may be preserved.

The fusion of the first and second detection results may be performed at an object level or at a pixel level.

In one example, the first and second detection results are fused using the Bayesian fusion. In this example, the fusion of the first and second detection results may involve pixel-pixel fusion, object-object fusion, or pixel-object fusion.

For example, the first detection result may show the detection result of the object at the pixel level, and the second detection result similarly shows the detection result of the changed object at the pixel level. For instance, the second detection result may indicate the presence of a changed object (e.g., marking the pixels corresponding to an unknown type of changed object as gray), or each pixel value in the second detection result may be set based on the probability of that pixel being occupied by a changed object. Each pixel in the first detection result may be set according to similar rules. As such, the fusion of the first and second detection results may be a fusion at the pixel level (pixel-pixel).

For example, the first detection result may show the object detection result at the object level, while the second detection result similarly shows the changed object detection result at the object level. The detected object is usually enclosed in a bounding box during the image perception process. The detection result of the object's bounding box may be represented by coordinate positions in the image coordinate system. As such, the fusion of the first and second detection results may be a fusion of objects' bounding boxes, i.e., a fusion at the object level (object-object).

It may also be anticipated that the first detection result shows the object detection result at the object level, while the second detection result shows the changed object detection result at the pixel level. As such, the fusion of the first and second detection results may be a pixel-object fusion.

In another example, the first and second detection results are fused using a multilayer perceptron (MLP). In this example, the fusion of the first and second detection results may be a pixel-pixel fusion or an object-object fusion as described above.

Regardless of the fusion method used or the fusion level, by fusing the first and second detection results, the neural network according to the present disclosure detects the input image from different layers, not only retaining sensitivity to changes in the background of the input image but also providing sensitivity to changes in foreground objects of the input image, thereby reducing common cause failures.

On the basis of achieving the fusion purpose using the aforementioned fusion methods, different logics may be employed to design the fusion algorithm for a specific downstream task to achieve various effects. In one example, fusing the first and second detection results comprises adding the changed object detected in the second detection result to the first detection result. For example, if the first neural network fails to present a changed area in the first detection result due to low confidence (false negative, FN), but the second detection result shows a high probability of pixels being occupied in that area, then after the fusion step (e.g., Bayesian fusion), the object detection result for that change region may be adjusted or re-obtained in the first detection result based on the second detection result, outputting the detection result that an object is present in that change region. Specifically, by only adding the changed object detected in the second detection result to the first detection result while keeping the first detection result unchanged, (1) if an object is detected in a region in the first detection result but no changed object is detected in that region in the second detection result, there is no detected changed object in the second detection result to add to the first detection result, hence there is no need to add any changed object to the first detection result, and the final perception result depends on the first detection result, which comprises the object in that region; (2) if an object is detected in a region in the first detection result and a changed object is detected in that region in the second detection result, the changed object in the second detection result is added to the first detection result and further superimposed, such that the final perception result also comprises the object in that region; (3) if no object is detected in a region in the first detection result and no changed object is detected in that region in the second detection result, there is no detected changed object in the second detection result to add to the first detection result, and since there is no changed object to be added, the final result remains that there is no object in that region; (4) if no object is detected in a region in the first detection result and an object is detected in that region in the second detection result, the object is added to the first detection result, and the final result depends on the second detection result and comprises the object in that region. Therefore, for one or more regions in the image, as long as either the first neural network or the second neural network detects the presence of an object, the final output will include the detected object in that region. In another example, for one or more regions in the image, only objects not included in the second detection result are removed from the first detection result. For example, the first neural network may detect the presence of an object in a certain image region due to confidence level above the threshold (false positive, FP), while the second neural network detects a low probability of the area being occupied. In this case, the detection result from the first detection result for that region may be removed through the fusion process, meaning that if the second neural network does not detect an object at an image position, even if the first neural network detected an object there, that detected object will not be included in the output. By only removing the object from the first detection result that is not included in the second detection result for a specific image region, (1) if an object is detected in the first detection result but not detected in the second detection result, the object detected in the first detection result is not included in the second detection result and needs to be removed from the first detection result, and the final perception result will no longer comprise the detection result of the object; (2) if an object is detected in both the first and second detection results, there is no object included in the first detection result that is not included in the second detection result, hence no objects need to be removed from the first detection result, and the final perception result will depend on the first detection result and comprise the object; (3) if an object is not detected in the first detection result but detected in the second detection result, similarly, there is no object included in the first detection result that is not included in the second detection result, hence no objects need to be removed from the first detection result, and the final perception result will depend on the first detection result, which does not comprise the object. Therefore, only when both the first and second neural networks detect the presence of an object will the detected object be included in the final output. In summary, the detection results of the first and second neural networks may be fused according to "AND" or "OR" logic based on the specific downstream task.

Although the above perception method 100 is described with reference to the first and second neural networks, this does not imply that they necessarily have different network structures. They may share the same network structure, for example, if they were obtained through different training data. Even if the first and second neural networks have the same network structure, their weights may differ after training due to their different focus on the input image.

Of course, it is more expected that the first and second neural networks have different network structures, for example, the first neural network is used for object detection and classification in the first image and the second neural network is solely used for detecting a changed object in the first image without classification. This allows designing the second neural network with a structure more suitable for focusing on changes in the input image, thereby achieving a more differentiated focus on the input image compared to the first neural network, avoiding common cause failures, and further improving perception accuracy, reliability, and robustness. Based on different network structures, it may also be anticipated that the first and second neural networks are obtained through different training data. While the first and second neural networks are distinctively described above, it should be understood that they may also share certain structures. For example, the first encoder of the first neural network and the second encoder of the second neural network may be the same encoder.

Although the above examples are described as first generating additional input and then inputting the additional input into the second neural network, this is not limiting, and it is also conceivable to treat the processing of generating additional input based on the first image as part of the second neural network, thereby obtaining a second detection result for the first image using the second neural network based on the first image. In one example, the second neural network comprises the second encoder and the second decoder as described earlier. The perception method according to the present disclosure comprises inputting a first image into the second encoder to generate an additional input representing a change in the first image and determining a second feature map based on the additional input. This includes extracting the second feature map based on the additional input, which may be generated based on at least one of the various examples described above, and then inputting the second feature map determined based on the additional input into the second decoder to obtain the second detection result. In an example, the second encoder and the second decoder may be implemented by different sub-neutral networks. In a specific example, the additional input to be determined comprises a first additional input representing a change between the first image and the reference image. In this case, the first image and the reference image may be input into an encoder shared by the first and second neural networks to output a first feature map extracted based on the first image and a second feature map characterizing the first additional input based on the first image and the reference image; wherein, the first feature map is input into the first decoder of the first neural network to obtain the first detection result; and the second feature map is input into the second decoder of the second neural network to obtain the second detection result.

In addition, although different examples for obtaining additional input have been described above, on the one hand, this is not limiting, and other methods may be used to obtain additional input representing changes in the first image; on the other hand, these examples may be used in combination. For instance, a plurality of additional inputs representing different types of changes in the first image may be generated, and the second detection result may be detected using the second neural network based on the plurality of additional inputs. In one example, the plurality of additional inputs may be combined and the combined plurality of additional inputs may be input into the second neural network to determine the second detection result.

In another example, not limited to the case of only one second neural network as shown in FIG. 1, there may be a plurality of second neural networks. That is, according to the examples of the present disclosure, there may be at least one second neural network. This at least one second neural network obtains at least one second detection result for the first image based on at least one additional input. The structure of each second neural network may be similar to the second neural network described earlier with reference to FIG. 1, and the second neural network described with reference to FIG.1 may represent any one of the at least one second neural network. In one example, each second neural network only involves the detection of changed objects without classification. In one example, each second neural network comprises the second encoder and second decoder as described above. Optionally, the second encoder of any one or more second neural networks may be a shared encoder with the first encoder of the first neural network. In yet another example, each second neural network may be designed to detect different types of changes. Each second neural network obtains corresponding second detection results based on different types of changes as described above. For example, one second neural network outputs a second detection result based on an additional input representing changes between the first image and the reference image, while another second neural network outputs a second detection result based on an additional input representing changes between different regions in the first image. A plurality of second neural networks for different types of changes may be used to generate a plurality of second detection results based on a plurality of additional inputs representing different types of changes. These plurality of second detection results are then fused with the first detection result to obtain the final perception result. The fusion algorithm between the plurality of second detection results and the first detection result is similar to the algorithm for fusing one second detection result with the first detection result.

The application of the neural network structure of the present disclosure (i.e., a neural network structure including a first neural network focused on target detection and classification and a second neural network focused on changes in the input image) is described above with reference to the perception method 100 shown in FIG. 1. It can be understood that before using the neural network according to the present disclosure for perception, the neural network first needs to be trained.

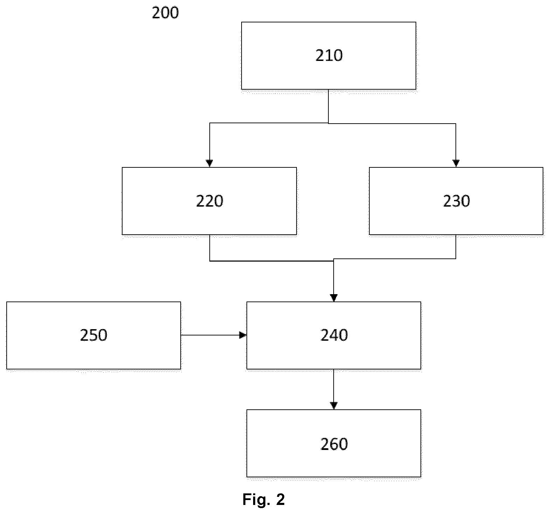

FIG. 2 illustrates a training method 200 for a neural network according to an example of the present disclosure. The neural network is used for perception in autonomous driving and has a neural network structure according to various examples of the present disclosure, including a first neural network focused on target detection and classification and at least one second neural network focused on detecting changed objects in the input image. The neural network may further comprise a fusion module, which uses a parametric model to fuse the output of the first neural network (the aforementioned first detection result) and the output of at least one second neural network (the aforementioned second detection result) as the output of the entire neural network. The parametric model comprises a multilayer perceptron or a gated recurrent unit (GRU). In this fusion module, outputs from the first neural network and at least one second neural network may first be combined into one output through a non-parametric operation (non-parametric method) to input into the parametric model. The non-parametric operation comprises at least one of the following: concatenation, Hadamard product, and element wise addition.

The neural network training method 200 shown in FIG. 2 comprises a pre-training process and a training process. In the pre-training process, the first neural network and at least one second neural network are first trained separately. Different loss functions may be used for pre-training the first neural network and at least one second neural network, and different or the same pre-training images may be used. On the basis of the pre-training process, in further training (joint training) of the image, a first training image with an object annotation result is input into the pre-trained first neural network and at least one second neural network to at least perform training on the parametric model used in the fusion module, thereby obtaining the final trained neural network.

Specifically, during the pre-training process of the image, the first neural network and at least one second neural network are first pre-trained to obtain at least part of their weights. In step 210, a plurality of first pre-training images for pre-training the first neural network and a plurality of second pre-training images for pre-training at least one second neural network are obtained. The first pre-training images have object annotation results, while the second pre-training images have foreground object annotation results. The object annotation results of the first pre-training images may involve annotations related to the detection of object location, shape, size, and object classification, while the foreground object annotation results only involve detection of object location and size, without object classification. The first and second pre-training images may be either the same or different pre-training images.

After obtaining the first and second pre-training images, steps 220 and 230 involve pre-training the first neural network and each second neural network among the at least one second neural network respectively, wherein the object annotation results of the first pre-training images and the foreground object annotation results of the second pre-training images are used as respective ground truth outputs for the first neural network and each second neural network among the at least one second neural network. This pre-training of the first neural network and at least one second neural network results in a pre-trained first neural network and at least one pre-trained second neural network. During the training process of the second neural network, at least one additional pre-training input needs to be generated based on the corresponding second pre-training images to train each of the at least one second neural network. Particularly, during the training process, a corresponding second pre-training detection result is obtained as the output of the second neural network based on each additional pre-training input among the at least one additional pre-training input and the corresponding second neural network. The output corresponds to the foreground object annotation results of the second pre-training image used as the ground truth output. As described similarly in reference to FIG. 1, each additional pre-training input among the at least one additional pre-training input represents at least one of the following changes in the corresponding second pre-training image: a change between the corresponding second pre-training image and the corresponding reference image, where the corresponding reference image comprises prior knowledge of the target region that the corresponding second pre-training image is targeting; a change between various regions in the corresponding second pre-training image; and a change between the corresponding second pre-training image and the second image, where the corresponding second pre-training image and the second image are temporally adjacent images captured of the target region.

The loss functions used for training the first neural network and at least one second neural network may be different from each other. Currently, identical loss functions may also be expected. Specifically, the loss function for the first neural network (depending on the task being performed, the loss function may vary) may be designed to compare the results of the first neural network with the object annotation results. If they are the same or their difference is within an acceptable range, it indicates that the first neural network has been adequately trained; if they are not the same or their difference is not within an acceptable range, it returns to adjust the parameters of the first neural network. This iterative process continues, pre-training the first neural network for each first pre-training image. The first neural network according to the present disclosure is pre-trained using the plurality of the above first pre-training images.

In addition, the loss function for each second neural network (depending on the task being performed, the loss function may vary) may be designed to compare the detection results of the second neural network with the foreground object annotation results. If they are the same or their difference is within an acceptable range, it indicates that the second neural network has been adequately trained; if they are not the same or their difference is not within an acceptable range, it returns to adjust the parameters of the second neural network. This iterative process continues, training the second neural network for each second pre-training image. The second neural network according to the present disclosure is pre-trained using the plurality of the above second pre-training images.

The first neural network comprises a first encoder and a first decoder, and each second neural network comprises a second encoder and a second decoder. During the pre-training process, the first encoder of the first neural network is used to extract the first feature map based on the first pre-training image, and the first decoder is used to obtain the first pre-training detection result based on the first feature map as the output of the first neural network. The second encoder of each second neural network is used to generate a corresponding first additional pre-training input based on the second pre-training image and determine a corresponding second feature map based on the corresponding first additional pre-training input. This corresponding first additional training input at least represents a change in the second pre-training image, and the second decoder is used to obtain the corresponding second pre-training detection result based on the corresponding second feature map.

For example, at least one additional pre-training input comprises a first additional pre-training input representing a change between the corresponding second pre-training image and a corresponding second reference image. Both the second pre-training image and the corresponding second reference image are obtained for the same target region, with the second reference image comprising prior knowledge about the same target region. The first additional pre-training input is used to pre-train a specific second neural network among the at least one second neural network.

Pre-training the specific second neural network may comprise using the corresponding second pre-training image and second reference image as inputs to the specific second neural network, and using the foreground object annotation result for the corresponding second pre-training image as the ground truth output to pre-train it. Wherein, the second encoder of the specific second neural network is used for generating the first additional pre-training input based on the input corresponding second pre-training image and second reference image, and determining the second feature map based on this first additional pre-training input. The second decoder of the specific second neural network is used to obtain a specific second detection result based on the second feature map as the output of the specific second neural network.

Although the operation of obtaining the first additional pre-training input based on the second pre-training image in the second encoder of the second neural network serves as a reference, it is not limiting. This operation may also be performed before inputting the second pre-training image into the encoder of the second neural network. Specifically, pre-training the specific second neural network may comprise first generating the first additional pre-training input based on the corresponding second pre-training image and second reference image, then using the first additional pre-training input as the input to the specific second neural network, and using the foreground object annotation result for the corresponding second pre-training image as the ground truth output to pre-train the specific second neural network. Specifically, the first additional pre-training input may be generated through image difference algorithms (such as matrix subtraction, etc.) based on the corresponding second pre-training image and second reference image.

After obtaining the pre-trained first neural network and at least one second neural network in steps 220 and 230 respectively, in step 240, a neural network including this pre-trained first neural network and at least one pre-trained second neural network is obtained. This neural network further comprises a fusion module based on a parametric model. A further training process for the entire neural network may then be performed.

Specifically, in step 250, a first training image S is obtained. The first training image is acquired for the target region and has an object annotation result. This first training image may be different from the first and second pre-training images used for pre-training earlier. A relatively small training image set may be used to perform pre-training while a relatively large training image set may be used to execute the training process.

After obtaining the first training image, the pre-trained first neural network and at least one pre-trained second neural network obtained in step 240 are further trained based on the acquired first training image. The object annotation result for the first training image is used as the ground truth output for the entire neural network to train at least the parametric model used in the fusion module of the entire neural network (e.g., a model comprising a multilayer perceptron or gated recurrent unit). This includes adjusting the parameters of the parametric model (e.g., the weights corresponding to each neuron for a multilayer perceptron). For the second neural network, at least one additional training input representing a change in the first training image needs to be obtained based on the first training image to train each second neural network among the at least one second neural network respectively.

In one scenario, the parameters (such as weights) of the first neural network and each second neural network obtained in the pre-training process remain unchanged, and only the parameters (e.g., weights) of the parametric model used in the fusion module are obtained through the training process. That is, during the training process, the pre-trained first neural network and each second neural network are not re-trained, and only the parametric model used in the fusion module is trained.

In another scenario, based on the parameters of the first neural network and each second neural network obtained in the pre-training process, not only are the parameters (such as weights) of the parametric model in the fusion module determined during the training process, but the parameters of the pre-trained first neural network and/or each second neural network (e.g., the weights corresponding to each neuron) are also further adjusted. That is, during the training process, not only is the parametric model used in the fusion module trained, but the pre-trained first neural network and/or second neural network are also further trained.

During the above training process, the first encoder of the first neural network is used to extract the first feature map based on the first training image, and the first decoder is used to obtain a first training detection result based on this first feature map for the first training image as the output of the first neural network. The at least one additional training input used to train the second neural network may be obtained by the second encoder of each second neural network, or may be obtained before inputting into the second neural network.

For example, the further training described above comprises: generating a first additional training input representing a change between the first training image and a corresponding first reference image based on the first training image and the corresponding first reference image, wherein the first training image and the corresponding first reference image are acquired for the same target region, and the first reference image comprises prior knowledge about the target region. The first additional training input is used as the input for the pre-trained specific second neural network among the at least one pre-trained second neural network. The second encoder of the pre-trained specific second neural network determines the second feature map based on the first additional training input, and the second decoder of this pre-trained specific second neural network obtains a specific second detection result based on the second feature map for the first additional training input as the output of the pre-trained specific second neural network; or, the first training image and corresponding first reference image are used as inputs for the pre-trained specific second neural network among the at least one pre-trained second neural network, where the second encoder of the pre-trained specific second neural network generates the first additional training input and determines the second feature map based on the first additional training input, the second decoder of the pre-trained specific second neural network obtains a specific second detection result based on the second feature map for the first additional training input as the output of the pre-trained specific second neural network. In the fusion module, the output of the first neural network and the outputs of the at least one second neural network may be combined into one output to input into the parametric model, thereby fusing their detection results to obtain the ground truth output of the neural network, i.e., the aforementioned annotation result for the first training image.

The aforementioned first and second training detection results are intermediate results produced separately by the first and second neural networks during the model training process. It is necessary to train 1) the parametric model, or 2) the parametric model as well as the pre-trained first and/or second neural networks (adjusting the model parameters of the first and/or second neural networks) such that the final perception result obtained after fusing the outputs of the first and second training detection results may correspond to the annotation result of the first training image (i.e., using the annotation result of the first training image as the ground truth output for the entire neural network). This determines the parameters (e.g., weights of each neuron) of the first neural network, each second neural network, and the parametric model, enabling the acquisition of the final trained entire neural network in step 260. In one example, during the above training process, the loss function of the entire neural network (depending on the task performed, the loss function may vary) may be designed to compare the fused result with the annotation result. If they are the same or their difference is within an acceptable range, it indicates that the neural network including the first neural network, second neural network, and parametric model has been adequately trained. If they are not the same or their difference is not within an acceptable range, it returns to adjust the parameters of the first neural network, the parameters of the second neural network, and/or the relevant parameters for fusing the outputs of the first and second neural networks (such as the parameters of the fusion algorithm in the fusion module). This iterative process continues, training the neural network for each pre-training image. By using a plurality of the first training images above to train the neural network according to the present disclosure, various parameters of the neural network, such as weights, may be obtained, thereby generating a neural network that is capable of being used for perception applications.

Although the training method of the neural network is described with reference to FIG. 2, according to this training method, the training of the first and at least one second neural network is coupled or strongly associated. However, this is not limiting, it is also conceivable to train the first and each second neural network separately, and then fuse the first and second trained neural networks. In this case, the fusion of the outputs of the first and second neural networks may be based on a non-parametric model, such as Bayesian fusion. The following description refers only to the case of one second neural network, but it can be understood that this also applies to the case of a plurality of second neural networks.

Specifically, a training method for a neural network is provided. The neural network is used for perception in autonomous driving and comprises a first neural network and a second neural network, and the outputs of the first and second neural networks are fused to obtain the output of the neural network. The training method comprises obtaining a first training image, which is acquired for a target region and has a first object annotation result; inputting the first training image into the first neural network and using the first annotation result as the ground truth output to train the first neural network, thereby obtaining a trained first neural network; obtaining a second training image that has an annotated foreground object; inputting the second training image into the second neural network and using the annotated foreground object as the ground truth output to train the second neural network, thereby obtaining a trained second neural network. For details of the separate training processes of the first and second neural networks, refer to the pre-training process of the first and second neural networks mentioned earlier; the same method may be used. After obtaining the trained first neural network and trained second neural network, the outputs of the trained first neural network and the trained second neural network may be fused via a non-parametric model (e.g., Bayesian fusion) to obtain the trained entire neural network. The first and second training images may be the same or different training images.

This separate training scenario may be implemented using the pre-training steps 220 - 230 shown in FIG. 2, where the first and second training images correspond to the first and second pre-training images in the aforementioned steps.

Although the data used for training the first and second neural networks are described separately with reference to first and second pre-training images (pre-training process) and first training image (joint training) in the case where the training of the first and at least one second neural networks is coupled or strongly associated, or with reference to first and second training images in the case where the first and at least one second neural networks are trained separately, this is not limiting. Each image may also be the same image. The above training images may be obtained in various ways.

In one example, data augmentation is expected to be used in the training process of the second neural network to improve the generalization thereof for different scenarios. Therefore, while using the first training image and object annotation result thereof to train the first neural network, the annotated foreground object in the first training image may be synthesized with different background objects to obtain augmented training data (e.g., synthesizing a foreground object from the first training image with a background object from another image to obtain augmented training data). Then, based on this augmented training data and the annotation result of the foreground object contained therein, the second neural network is trained to obtain a trained second neural network.

Specifically, in the case where the training of the first and at least one second neural networks is coupled or strongly associated (or in the aforementioned joint training process): a plurality first training images may be formed by synthesizing a plurality first reference images containing only backgrounds with annotated foreground objects such that each first training image is synthesized from an annotated foreground object and a first reference image containing the corresponding background; then, the plurality of first reference images corresponding to each first training image are transformed (e.g., rotated) to obtain transformed first reference images corresponding to each first training image, and the first training image and corresponding transformed first reference image thereof are used to obtain the first additional training input. Specifically, the plurality of transformed first reference images and corresponding first training images may be used as inputs to the second neural network, or the additional training input may be obtained based on the plurality of transformed first reference images and corresponding first training images before inputting into the second neural network. Each first training image has a corresponding first reference image. The plurality of synthesized first training images serve as input for both the first and second neural networks, thus requiring the first and second neural networks to have the same data source during the joint training phase.

In the case where the first and at least one second neural networks are trained separately (or in the aforementioned pre-training process), the first training images (or first pre-training images) and second training images (or second pre-training images) used for training the first and at least one second neural networks may be different. However, the second training images (or second pre-training images) and second reference images used for pre-training the second neural network may still be obtained using the same method described in the foregoing paragraph. Therefore, regardless of training the first and second neural networks separately or jointly, the training data may be obtained as described in the foregoing paragraph. By first using the background contained in the reference image to synthesize the training image, then transforming the reference image, and obtaining additional training input based on the transformed reference image and the training image, this ensures that the background of each training image used for training a specific second neural network has certain differences or changes compared to the corresponding transformed reference image. During the training phase, the second neural network may learn based on these differences/changes, increasing the attention weight thereof to the differential features of the training image compared to the corresponding transformed reference image. This makes it easier to detect whether there are foreground objects in areas of the image where changes have occurred. The training of the first neural network, on the other hand, focuses more on overall object detection and classification in the image. This results in the trained first and second neural networks having better complementarity or advantages of double validation (avoiding common cause failures) due to their different attention weights on features. By fusing the detection results of the first and second neural networks, the accuracy of downstream tasks may be greatly improved. However, this does not rule out the possibility that a small number of training images may have backgrounds that are identical and unchanged compared to their corresponding reference images.

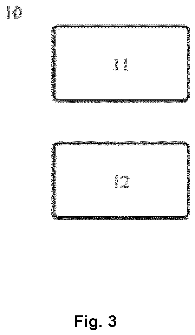

FIG. 3 illustrates a perception device 10 for autonomous driving according to an example of the present disclosure. The device comprises a memory 11 and a processor 12, wherein the processor 12 may be used to execute various steps of the perception method 100 described above. In particular, the processor 12 may be used for obtaining a first detection result for a first image using a first neural network based on the first image, wherein the first image is obtained for a target region; obtaining at least one second detection result for the first image using at least one second neural network based on the first image, wherein obtaining the at least one second detection result comprises generating at least one additional input based on the first image, with each additional input among the at least one additional input at least representing a change in the first image, and obtaining at least one second detection result for the first image using the at least one second neural network based on the at least one additional input; as well as fusing the first detection result and at least one second detection result to obtain a final perception result for the first image.

The device for training neural network may have a composition similar to that of the perception device 10 described above, i.e., including a memory and a processor, or the device for training neural network may be the same device as the perception device. The processor therein is particularly used for executing the various training methods described with reference to FIG. 2 above.

The examples of the present disclosure also relate to an autonomous driving system (not shown) comprising a camera for acquiring the first image of the target region and a perception device for autonomous driving according to various examples of the present disclosure. It can also be envisioned to include a device for training neural network.

The inventors of the present disclosure conducted validation comparisons between the perception method according to the present disclosure and existing methods in roadside perception. It has been demonstrated that the method according to the present disclosure is capable of recognizing an object that has not appeared in the training dataset (such as an unexpected cardboard box on the road) as a high-dimensional feature along with a known foreground object (such as a pedestrian, vehicle, bicycle, or the like). This is in contrast to existing methods where an object that has not appeared before (such as the aforementioned cardboard box) is mixed into background features and thus cannot be detected.

The functions of the perception method and device for autonomous driving, as well as the training method and device for neural network according to the present disclosure, can be achieved by software or the corresponding hardware, or the functions of the various units above can be achieved by means of a processor, for example, a processor can read computer programs in memory and run these computer programs to achieve the functions of the various units above. In an example, the above device of the present disclosure may also be implemented by a memory and a processor.

It should be understood that the method according to the various examples of the present disclosure can be achieved by computer programs/software. These software can be loaded into a working memory of the processor and used to perform the method in accordance with various examples of the present disclosure when run.

It should be understood that the method and device according to the present disclosure may be performed by a device with processing capabilities or at a remote location. Exemplary examples of the present disclosure cover the following two aspects: computer programs/software of the present disclosure created/used from the outset, and existing programs/software converted to computer programs/software of the present disclosure by way of an update.

According to other examples of the present disclosure, a computer program product is provided, such as a machine (e.g., a computer)-readable medium, such as CD-ROM, which comprises a computer program code therein that, when executed, causes the computer or processor to perform the method according to the various examples of the present disclosure. The machine-readable medium is, for example, an optical storage medium or solid-state medium supplied with or as part of other hardware.

According to other examples of the present disclosure, a system for packaging is provided, comprising a 3D camera disposed above a packaging container and a device according to various examples of the present disclosure.

Specific examples of the present disclosure are described above. Other examples are within the scope of the appended Claims. In some cases, actions or steps described in the Claims can be performed in a different order than that of the examples and still achieve the desired results. Additionally, the processes depicted in the drawings do not necessarily require specific or continuous sequences to achieve the desired results. In some examples, multitasking and parallel processing are also possible or advantageous.

The present disclosure is described above with reference to specific examples, and it should be understood by those skilled in the art that the technical solution of the present disclosure can be achieved in a variety of ways without departing from the spirit and basic features of the present disclosure. Specific examples are merely illustrative and not limiting. In addition, any combination of these examples is possible to achieve the purposes of the present disclosure. The scope of protection of the present disclosure is defined by the appended Claims.

The word "comprises" in the Specification and Claims does not preclude the presence of other elements or steps, and the expression of "first", "second", expressions involving various "steps", and the sequence of various steps shown in the drawings do not limit their order or number. The functions of the various elements illustrated in the Specification or recorded in the Claims may also be split or combined by a corresponding plurality of elements or a single element.

## Claims

1. A perception method for autonomous driving, comprising:
obtaining a first detection result for a first image using a first neural network based on the first image, wherein the first image is obtained for a target region;
obtaining at least one second detection result for the first image using at least one second neural network based on the first image, wherein obtaining the at least one second detection result comprises generating at least one additional input based on the first image, with each additional input among the at least one additional input at least representing a change in the first image, and obtaining at least one second detection result for the first image using the at least one second neural network based on the at least one additional input; and
fusing the first detection result and at least one second detection result to obtain a final perception result for the first image.

2. The perception method according to Claim 1, wherein:
the first neural network is used for detecting and classifying an object in the target region;
each of the second neural network among the at least one second neural network is used for detecting a changed object in the target region but does not involve classification of the changed object.

3. The perception method according to Claim 1, wherein obtaining the at least one second detection result comprises:
generating the at least one additional input based on the first image, wherein when the at least one additional input comprises a plurality of additional inputs, the plurality of additional inputs are different from one another;
inputting each additional input among the at least one additional input into the corresponding second neural network among the at least one second neural network to obtain a corresponding second detection result.

4. The perception method according to Claim 1, wherein each second neural network among the at least one second neural network comprises a second encoder and a second decoder, and the perception method further comprises:
inputting the first image into the second encoder to generate a corresponding additional input based on the first image and determining a second feature map based on the corresponding additional input; and
inputting the second feature map into the second decoder to obtain a corresponding second detection result.

5. The perception method according to Claim 4, wherein the first neural network comprises a first encoder, which is used for determining a first feature map based on the first image, and a first decoder, which is used for obtaining the first detection result based on the first feature map, wherein the first encoder of the first neural network and the second encoder of any second neural network among the at least one second neural network are either the same encoder or different encoders.

6. The perception method according to any one of Claims 1 - 3, wherein each additional input among the at least one additional input represents at least one of the following changes in the first image:
a change between the first image and a corresponding reference image, where the reference image comprises prior knowledge of the target region;
a change among various regions in the first image; and
a change between the first image and a second image, where the first and second images are temporally adjacent images captured of the target region.

7. The perception method according to Claim 6, wherein the at least one additional input comprises a first additional input, which represents a change between the first image and the corresponding reference image, and the perception method comprises:
generating the first additional input based on the first image and the corresponding reference image, inputting the first additional input into a corresponding second neural network among the at least one second neural network to obtain a corresponding second detection result; or, inputting the first image and the corresponding reference image into an encoder to respectively output a first feature map extracted based on the first image and a second feature map characterizing the first additional input based on the first image and the corresponding reference image; inputting the first feature map into a first decoder to obtain the first detection result; inputting the second feature map into a second decoder to obtain the corresponding second detection result; wherein, the first neural network and the corresponding second neural network comprise a common encoder, the first neural network further comprises the first decoder, and the corresponding second neural network further comprises the second decoder.

8. The perception method according to Claim 6, wherein the at least one additional input comprises a first additional input, which represents a change between the first image and the corresponding reference image, and the perception method further comprises:
averaging a plurality of images obtained for the target region to generate the corresponding reference image; and
generating the first additional input based on the first image and the corresponding reference image.

9. The perception method according to Claim 8, wherein the first additional input is generated based on the first image and the corresponding reference image using at least one of the following algorithms:
matrix subtraction;
Hadamard product; and
attention mechanism.

10. The perception method according to Claim 6, wherein the at least one additional input comprises a second additional input, which represents a change among various regions in the first image, and the perception method further comprises:
performing saliency detection on the first image to generate the second additional input.

11. The perception method according to Claim 6, wherein the at least one additional input comprises a third additional input, which represents a change between the first and second images, and the perception method further comprises:
processing the first and second images based on optical flow method to generate the third additional input representing motion changes of corresponding pixels in the first and second images.

12. The perception method according to any one of Claims 1 - 3, wherein the network structure of the first neural network and any second neural network among the at least one second neural network differs and/or is obtained through different training data.

13. The perception method according to Claim 12, wherein:
the first neural network is obtained through training on a training image and an object annotation result in the training image; and
the second neural network is trained and obtained based on augmented training data, which is obtained by synthesizing a foreground object annotation result from the training image with different background objects.

14. The perception method according to Claim 2, wherein the first detection result at least comprises a detection result of the object detected in the target region, and each second detection result among the at least one second detection result comprises a detection result of the changed object detected in the target region.

15. The perception method according to Claim 14, wherein the first detection result further comprises a classification result of the object classified in the target region.

16. The perception method according to Claim 14, wherein fusing the first detection result and the at least one second detection result comprises:
for a specific region in the first image, adding the changed object detected in each second detection result among the at least one second detection result to the first detection result to obtain the final perception result; and/or
for a specific region in the first image, removing from the first detection result the object included in the first detection result but not included in the at least one second detection result to obtain the final perception result.

17. A training method for a neural network used for perception in autonomous driving, comprising a first neural network, at least one second neural network, and a fusion module used for fusing the output of the first neural network with the output of the at least one second neural network to obtain the output of the neural network, and the training method comprises:
pre-training the first neural network based on a plurality of first pre-training images and an object annotation result for each first pre-training image to obtain a pre-trained first neural network, wherein, a corresponding first pre-training detection result is obtained using the first neural network based on each first pre-training image among the plurality of first pre-training images;
pre-training each second neural network among the at least one second neural network based on a plurality of second pre-training images and a foreground object annotation result of each second pre-training image to obtain at least one pre-trained second neural network, wherein, at least one additional pre-training input is generated based on each second pre-training image, and a corresponding second pre-training detection result is obtained based on each additional pre-training input among the at least one additional pre-training input and corresponding second neural network; the at least one additional pre-training input at least represents a change in the second pre-training image, and the first and second pre-training images may be the same or different pre-training images.

18. The training method according to Claim 17, wherein the fusion module is used for fusing the output of the first neural network and the output of the at least one second neural network based on a parametric model, and the training method further comprises:
training one of the following to obtain a trained neural network based on a plurality of first training images and an object annotation result for each first training image among the plurality of first training images: i) the parametric model on which the fusion module is based; or ii) the parametric model, and the first neural network and/or the at least one second neural network comprised in the neural network;
wherein the output of the pre-trained first neural network and the output of the at least one pre-trained second neural network are used as inputs to the fusion module, and the parametric model is trained at least based on the object annotation results of the first training images serving as a ground truth output.

19. The training method according to Claim 18, wherein each additional pre-training input among the at least one additional pre-training input represents at least one of the following changes in the corresponding second pre-training image:
a change between the corresponding second pre-training image and the corresponding reference image, where the corresponding reference image comprises prior knowledge of the target region for which the corresponding second pre-training image is intended;
a change between various regions in the corresponding second pre-training image; and
a change between the corresponding second pre-training image and the second image, where the corresponding second pre-training image and the second image are temporally adjacent images captured of the target region.

20. The training method according to Claim 19, wherein the at least one additional pre-training input comprises a first additional pre-training input, which represents a change between a corresponding second pre-training image and a corresponding second reference image and is used for training a specific second neural network among the at least one second neural network, with each second neural network among the at least one second neural network comprising a second encoder and a second decoder, and the pre-training of the specific second neural network comprises:
generating the first additional pre-training input based on the corresponding second pre-training image and the second reference image, using the first additional pre-training input as the input for the specific second neural network, and pre-training the specific second neural network using a foreground object annotation result of the corresponding second pre-training image as a ground truth output of the specific second neural network; or,
using the corresponding second pre-training image and the second reference image as inputs for the specific second neural network and pre-training the specific second neural network using a foreground object annotation result of the corresponding second pre-training image as the ground truth output of the specific second neural network, wherein, the second encoder of the specific second neural network is used for generating the first additional pre-training input based on the input of the corresponding second pre-training image and the second reference image, as well as for determining the second feature map based on the first additional pre-training input, and the second decoder of the specific second neural network is used for obtaining a specific second detection result based on the second feature map serving as the output of the specific second neural network.

21. The training method according to Claim 20, wherein obtaining the trained neural network based on the plurality of first training images and the object annotation result for each first training image among the plurality of first training images comprises:
generating a first additional training input based on each first training image and a corresponding first reference image, using the first additional training input as an input to a pre-trained specific second neural network among the at least one pre-trained second neural network, determining a second feature map by the second encoder of the pre-trained specific second neural network based on the first additional training input, and obtaining a specific second detection result as an output of the pre-trained specific second neural network based on the second feature map of the first additional training input by the second decoder of the pre-trained specific second neural network; or,
using each first training image and a corresponding first reference image as inputs to a pre-trained specific second neural network among the at least one pre-trained second neural network, generating the first additional training input by the second encoder of the pre-trained specific second neural network, determining a second feature map based on the first additional training input, and obtaining a specific second detection result as an output of the pre-trained specific second neural network based on the second feature map of the first additional training input by the second decoder of the pre-trained specific second neural network;
wherein the first additional training input represents a change between each first training image and a corresponding first reference image, both obtained for the same target region, with the first reference image comprising prior knowledge about the same target region.

22. The training method according to Claim 21, wherein the plurality of first training images and the corresponding first reference images are obtained through the following steps:
synthesizing a plurality of first reference images containing only backgrounds with annotated foreground objects to form the plurality of first training images such that each first training image is synthesized from an annotated foreground object and a first reference image containing the corresponding background; and
transforming the plurality of first reference images corresponding to each of the plurality of first training images to obtain a transformed first reference image corresponding to each first training image.

23. The training method according to Claim 19, wherein the first neural network comprises a first encoder and a first decoder, of which the first encoder is used for extracting a first feature map based on an input image, and the first decoder is used for obtaining a first detection result based on the first feature map as an output of the first neural network;
the first encoder and second encoder are the same encoder or different encoders.

24. The training method according to Claim 18, wherein the parametric model comprises a multilayer perceptron or gated recurrent unit.

25. A perception device for autonomous driving, comprising:
a memory, and
a processing unit, which is used for
obtaining a first detection result for a first image using a first neural network based on the first image, wherein the first image is obtained for a target region;
obtaining at least one second detection result for the first image using at least one second neural network based on the first image, wherein obtaining the at least one second detection result comprises generating at least one additional input based on the first image, with each additional input among the at least one additional input at least representing a change in the first image, and obtaining at least one second detection result for the first image using the at least one second neural network based on the at least one additional input; and
fusing the first detection result and at least one second detection result to obtain a final perception result for the first image.

26. An autonomous driving system, comprising:
a camera for obtaining a first image of a target region; and
the perception device for autonomous driving according to Claim 25.

27. A computer-readable medium storing a computer program that, when executed by a processor, causes the processor to execute the perception method for autonomous driving according to any one of Claims 1 - 16 or the training method for a neural network according to any one of Claims 17 - 24.
